# EUROPEAN PATENT APPLICATION

(11) **EP 3 862 372 A1**
(43) Date of publication of application: **11.08.2021**
(21) Application number: 19869349.1
(22) Date of filing: 04.10.2019
(51) Int. Cl.: C08F 290/06, C03C 25/1065, C03C 25/285, C03C 25/40, C03C 25/47, C03C 25/50, G02B 6/44

(54) **RESIN COMPOSITION AND OPTICAL FIBER**

(30) Priority: 04.10.2018 JP 2018189221
(71) Applicant: SUMITOMO ELECTRIC INDUSTRIES, LTD., Osaka-shi, Osaka 541-0041 (JP)
(72) Inventor: HAMAKUBO Katsushi, Osaka-shi, Osaka 541-0041 (JP)
(74) Representative: Hoffmann Eitle
(86) International application number: PCT/JP2019/039344
(87) International publication number: WO 2020/071544

(57) **Abstract**

A resin composition includes a base resin containing a urethane (meth)acrylate oligomer, a monomer having a phenoxy group, a photopolymerization initiator, and a silane coupling agent and hydrophobic inorganic oxide particles, wherein the content of the inorganic oxide particles is 1% by mass or more and 45% by mass or less based on the total amount of the resin composition.

## Description

### Technical Field

The present disclosure relates to a resin composition and an optical fiber.

This application claims priority based on Japanese Patent Application No. 2018-189221 filed on October 4, 2018, and incorporates all the contents described in the Japanese application.

### Background Art

An optical fiber has generally a coating resin layer for protecting a glass fiber which is an optical transmission medium. The optical fiber has been required to have excellent lateral pressure characteristics in order to reduce an increase in transmission loss induced by micro-bend generated when lateral pressure is applied to the optical fiber.

The coating resin layer includes, for example, a primary resin layer and a secondary resin layer. The primary resin layer is required to have a low Young's modulus and excellent flexibility (for example, refer to Patent Literature 1).

### Citation List

### Patent Literature

[Patent Literature 1] JP 2013-197163 A

### Summary of Invention

The resin composition according to one aspect of the present disclosure includes a base resin containing a urethane (meth) acrylate oligomer, a monomer having a phenoxy group, a photopolymerization initiator, and a silane coupling agent, and hydrophobic inorganic oxide particles, wherein the content of the inorganic oxide particles is 1% by mass or more and 45% by mass or less based on the total amount of the resin composition.

### Brief Description of Drawings

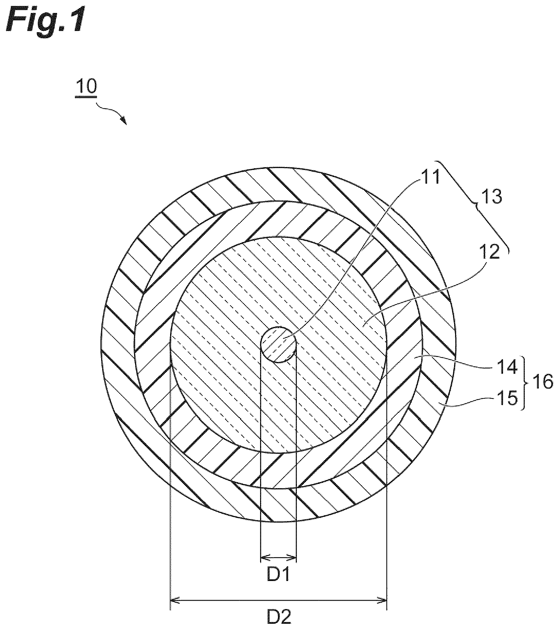

FIG. 1 is a schematic cross-section diagram showing an example of the optical fiber according to the present embodiment.

### Description of Embodiments

### [Problem to be solved by the present disclosure]

From the view point of improving the lateral pressure characteristics of the optical fiber, it is desirable to reduce the Young's modulus of the primary resin layer, but as the Young's modulus of the primary resin layer decreases, the strength of the primary resin layer decreases, and voids are easily generated in the optical fiber.

An object of the present disclosure is to provide a resin composition capable of forming a resin layer in which the generation of voids is suppressed and which improves the lateral pressure characteristics of an optical fiber, and an optical fiber comprising a primary resin layer formed from the resin composition.

### [Advantageous Effects of the Present Disclosure]

The present disclosure can provide a resin composition for coating an optical fiber capable of forming a resin layer in which the generation of voids is suppressed and which improves the lateral pressure characteristics of an optical fiber, and an optical fiber comprising a primary resin layer formed from the resin composition.

### [Description of Embodiment of the Present Disclosure]

First, the contents of the embodiment of the present disclosure will be described by listing them. The resin composition according to one aspect of the present disclosure comprises a base resin containing a urethane (meth)acrylate oligomer, a monomer having a phenoxy group, a photopolymerization initiator, and a silane coupling agent, and hydrophobic inorganic oxide particles, wherein the content of the inorganic oxide particles is 1% by mass or more and 45% by mass or less based on the total amount of the resin composition.

Using inorganic oxide particles in a specific range together with a monomer having a phenoxy group can form a resin layer capable of suppressing the generation of voids and improving the lateral pressure characteristics of an optical fiber.

From the view point of further improving the lateral pressure characteristics of an optical fiber, the content of the monomer having a phenoxy group may be 0.5% by mass or more and 60% by mass or less based on the total amount of the base resin.

From the view point of excellent dispersion properties in the resin composition and easy formation of the tough resin layer, the inorganic oxide particles may be at least one selected from the group consisting of silicon dioxide, zirconium dioxide, aluminum oxide, magnesium oxide, titanium oxide, tin oxide, and zinc oxide. From the view point of reducing the Young's modulus of the resin layer, the average primary particle size of the inorganic oxide particles may be 650 nm or less.

The primary coating material of the optical fiber according to one aspect of the present disclosure comprises the above resin composition. Using the resin composition according to the present embodiment for the primary resin layer, an optical fiber in which the generation of voids is suppressed and which is excellent in lateral pressure characteristics can be formed.

An optical fiber according to one aspect of the present disclosure comprises a glass fiber comprising a core and cladding, a primary resin layer contacting with the glass fiber and coating the glass fiber, and a secondary resin layer coating the primary resin layer, and the primary resin layer comprises the cured product of the resin composition. Application of the resin composition according to the present embodiment to the primary resin layer can improve the lateral pressure characteristics of the optical fiber.

From the view point of further improving the lateral pressure characteristic of the optical fiber, the Young's modulus of the cured product of the above resin composition may be 4 MPa or less at 23°C ± 2°C.

### [Detail of Embodiment of the Present Disclosure]

Specific examples of a resin composition and an optical fiber according to embodiments of the present disclosure will be described referring to the drawing as necessary. The present invention is not limited to these illustrations but is indicated by the claims and intended to include meanings equivalent to the claims and all modifications within the claims. In the following description, the same reference numerals are given to the same elements in the description of the drawing, and redundant explanations are omitted.

### <Resin composition>

The resin composition according to the present embodiment includes a base resin containing a urethane (meth)acrylate oligomer, a monomer having a phenoxy group, a photopolymerization initiator, and a silane coupling agent, and hydrophobic inorganic oxide particles.

(Meth)acrylate means an acrylate or a methacrylate corresponding to it. The same applies to (meth)acrylic acid.

### (Base resin)

The base resin according to the present embodiment contains a urethane (meth) acrylate oligomer, a monomer having a phenoxy group, a photopolymerization initiator, and a silane coupling agent. Using a monomer having a phenoxy group can form a resin layer capable of suppressing the generation of voids and improving the lateral pressure characteristics of an optical fiber.

A (meth)acrylate compound having a phenoxy group can be used as the monomer having a phenoxy group. Examples of the (meth)acrylate compound having a phenoxy group include phenol EO-modified (meth)acrylate, nonylphenol EO-modified (meth)acrylate, phenol PO modified (meth)acrylate, nonylphenol PO modified (meth)acrylate, phenoxyethyl (meth)acrylate, 2-hydroxy-3-phenoxypropyl (meth)acrylate, and 3-phenoxybenzyl (meth)acrylate. EO modification means having an ethylene oxide group represented by (C₂H₄O)ₙ, and PO modification means having a propylene oxide group represented by (C₃H₆O)ₙ. n is an integer of 1 or more.

From the view point of adjusting the Young's modulus of the cured product, the monomer having a phenoxy group may be at least one selected from the group consisting of phenol EO-modified (meth)acrylate, nonylphenol EO-modified (meth)acrylate, phenoxyethyl (meth)acrylate, 2-hydroxy-3-phenoxypropyl (meth)acrylate, and 3-phenoxybenzyl (meth)acrylate. The monomer having a phenoxy group may be used in combination of two or more.

The content of the monomer having a phenoxy group is preferably 0.5% by mass or more and 60% by mass or less, more preferably 1% by mass or more and 55% by mass or less, and still more preferably 2% by mass or more and 50% by mass or less, based on the total amount of base resin. The resin composition includes a monomer having a phenoxy group in such a range, allowing a resin layer having an appropriate Young's modulus as a primary coating material for an optical fiber to be formed.

The base resin may further contain a monomer having no phenoxy group. The monomer having no phenoxy group may be a monofunctional monomer having one polymerizable group or a polyfunctional monomer having two or more polymerizable groups. The monomer having no phenoxy group may be used in combination of two or more.

Examples of the monofunctional monomer having no phenoxy group include (meth)acrylate monomers such as methyl (meth)acrylate, ethyl (meth)acrylate, propyl (meth)acrylate, n-butyl (meth)acrylate, sec-butyl (meth)acrylate, tert-butyl (meth)acrylate, isobutyl (meth)acrylate, n-pentyl (meth)acrylate, isopentyl (meth)acrylate, hexyl (meth)acrylate, heptyl (meth)acrylate, isoamyl (meth)acrylate, 2-ethylhexyl (meth)acrylate, n-octyl (meth)acrylate, isooctyl (meth)acrylate, isodecyl (meth)acrylate, lauryl (meth)acrylate, 4-tert-butylcyclohexanol (meth)acrylate, tetrahydrofurfuryl (meth)acrylate, benzyl (meth)acrylate, dicyclopentenyl (meth)acrylate, dicyclopentenyloxyethyl (meth)acrylate, dicyclopentanyl (meth)acrylate, nonylphenol polyethylene glycol (meth)acrylate, and isobornyl (meth)acrylate; carboxyl group containing monomers such as (meth)acrylic acid, (meth)acrylic acid dimer, carboxyethyl (meth)acrylate, carboxypentyl (meth)acrylate, and ω-carboxy-polycaprolactone (meth)acrylate; heterocycle containing (meth)acrylates such as N-acryloylmorpholine, N-vinyl pyrrolidone, N-vinyl caprolactam, N-acryloylpiperidine, N-methacryloylpiperidine, N-acryloylpyrrolidine, 3-(3-pyridine) propyl (meth)acrylate, and cyclic trimethylolpropane formal acrylate; maleimide monomers such as maleimide, N-cyclohexyl maleimide, and N-phenyl maleimide; N-substituted amide monomers such as (meth)acrylamide, N, N-dimethyl (meth)acrylamide, N, N-diethyl (meth)acrylamide, N-hexyl (meth)acrylamide, N-methyl (meth)acrylamide, N-isopropyl (meth)acrylamide, N-butyl (meth)acrylamide, N-methylol (meth)acrylamide, and N-methylolpropane (meth)acrylamide; aminoalkyl (meth)acrylate monomers such as aminoethyl (meth)acrylate, aminopropyl (meth)acrylate, N, N-dimethylaminoethyl (meth)acrylate, and tert-butylaminoethyl (meth)acrylate; and succinimide monomers such as N-(meth)acryloyloxymethylene succinimide, N-(meth)acryloyl-6-oxyhexamethylene succinimide, and N- (meth)acryloyl-8-oxyoctamethylene succinimide.

Examples of the polyfunctional monomer having no phenoxy group include ethylene glycol di(meth)acrylate, polyethylene glycol di(meth)acrylate, polypropylene glycol di(meth)acrylate, neopentyl glycol di(meth)acrylate, tripropylene glycol di(meth)acrylate, di(meth)acrylate of alkylene oxide adduct of bisphenol A, tetraethylene glycol di(meth)acrylate, hydroxypivalic acid neopentyl glycol di(meth)acrylate, 1,4-butanediol di(meth)acrylate, 1,6-hexanediol di(meth)acrylate, 1,9-nonanediol di(meth)acrylate, 1,12-dodecanediol di(meth)acrylate, 1,14-tetradecanediol di(meth)acrylate, 1,16-hexadecanediol di(meth)acrylate, 1,20-eicosanediol di(meth)acrylate, isopentyl diol di(meth)acrylate, 3-ethyl-1, 8-octanediol di(meth)acrylate, EO adduct of bisphenol A di(meth)acrylate, trimethylol propane tri(meth)acrylate, trimethylol octane tri(meth)acrylate, trimethylol propane polyethoxy tri(meth)acrylate, trimethylol propane polypropoxy tri(meth)acrylate, trimethylol propane polyethoxy polypropoxy tri(meth)acrylate, tris[(meth)acryloyloxyethyl] isocyanurate, pentaerythritol tri(meth)acrylate, pentaerythritol polyethoxy tetra(meth)acrylate, pentaerythritol polypropoxy tetra(meth)acrylate, pentaerythritol tetra(meth)acrylate, ditrimethylol propane tetra(meth)acrylate, dipentaerythritol tetra(meth)acrylate, dipentaerythritol penta(meth)acrylate, dipentaerythritol hexa(meth)acrylate, and caprolactone-modified tris[(meth)acryloyloxyethyl] isocyanurate.

From the view point of forming a coating film having a desired Young's modulus while reducing the viscosity of the resin composition, tripropylene glycol di(meth)acrylate, 1,6-hexanediol di(meth)acrylate, and trimethylolpropane tri(meth)acrylate may be used as a polyfunctional monomer. Among them, 1,6-hexanediol di(meth)acrylate is preferable as a polyfunctional monomer.

As the urethane (meth)acrylate oligomer, an oligomer obtained by reacting a polyol compound, a polyisocyanate compound, and a hydroxyl group-containing (meth)acrylate compound can be used.

Examples of the polyol compound include polytetramethylene glycol, polypropylene glycol and bisphenol A-ethylene oxide addition diol. The number average molecular weight of the polyol compound is preferably 1000 or more and 8000 or less, more preferably 1200 or more and 6500 or less, and still more preferably 1500 or more and 6000 or less. Examples of the polyisocyanate compound includes 2,4-tolylene diisocyanate, 2,6-tolylene diisocyanate, isophorone diisocyanate, and dicyclohexylmethane 4,4'-diisocyanate. Examples of the hydroxyl group-containing (meth)acrylate compound include 2-hydroxyethyl (meth)acrylate, 2-hydroxybutyl (meth)acrylate, 1,6-hexanediol mono(meth)acrylate, pentaerythritol tri(meth)acrylate, 2-hydroxypropyl (meth)acrylate, and tripropylene glycol mono(meth)acrylate.

As a catalyst for synthesizing a urethane (meth)acrylate oligomer, an organotin compound is generally used. Examples of the organotin compound include dibutyltin dilaurate, dibutyltin diacetate, dibutyltin maleate, dibutyltin bis(2-ethylhexyl mercaptoacetate), dibutyltin bis(isooctyl mercaptoacetate), and dibutyltin oxide. From the view point of easy availability or catalyst performance, it is preferable that dibutyltin dilaurate or dibutyltin diacetate be used as catalyst.

When the urethane (meth)acrylate oligomer is synthesized, lower alcohols having 5 or less carbon atoms may be used. Examples of the lower alcohols include methanol, ethanol, 1-propanol, 2-propanol, 1-butanol, 2-butanol, 2-methyl-2-propanol, 1-pentanol, 2-pentanol, 3-pentanol, 2-methyl-1-butanol, 3-methyl-1-butanol, 2-methyl-2-butanol, 3-methyl-2-butanol, and 2,2-dimethyl-1-propanol.

The base resin according to the present embodiment may further contain an epoxy (meth)acrylate oligomer as an oligomer. As an epoxy (meth)acrylate oligomer, an oligomer obtained by reacting a compound having a (meth)acryloyl group with an epoxy resin having two or more glycidyl groups can be used.

The photopolymerization initiator can be appropriately selected from known radical photopolymerization initiators and used. Examples of the photopolymerization initiator include 1-hydroxycyclohexyl phenyl ketone, 2,2-dimethoxy-2-phenylacetophenone, 1-(4-isopropylphenyl)-2-hydroxy-2-methylpropan-1-one, bis(2,6-dimethoxybenzoyl)-2,4,4-trimethylpentylphosphine oxide, 2-methyl-1-[4-(methylthio)phenyl]-2-morpholino-propan-1-one (Omnirad 907 manufactured by IGM Resins), 2,4,6-trimethylbenzoyldiphenylphosphine oxide (Omnirad TPO manufactured by IGM Resins), and bis(2,4,6-trimethylbenzoyl) phenylphosphine oxide (Omnirad 819, manufactured by IGM Resins).

The silane coupling agent is not particularly limited as long as it does not disturb curing of the resin composition. Examples of the silane coupling agent include tetramethyl silicate, tetraethyl silicate, mercaptopropyl trimethoxysilane, vinyltrichlorosilane, vinyltriethoxysilane, vinyltris(β-methoxy-ethoxy)silane, β-(3,4-epoxycyclohexyl)-ethyltrimethoxysilane, dimethoxydimethylsilane, diethoxydimethylsilane, 3-acryloxypropyltrimethoxysilane, γ-glycidoxypropyltrimethoxysilane, γ-glycidoxypropylmethyldiethoxysilane, γ-methacryloxypropyltrimethoxysilane, N-(β-aminoethyl)-γ-aminopropyltrimethoxysilane, N-(β-aminoethyl)-y-aminopropyltrimethyldimethoxysilane, N-phenyl-γ-aminopropyltrimethoxysilane, γ-chloropropyltrimethoxysilane, γ-mercaptopropyltrimethoxysilane, γ-aminopropyltrimethoxysilane, bis-[3-(triethoxysilyl)propyl]tetrasulfide, bis-[3-(triethoxysilyl)propyl]disulfide, γ-trimethoxysilylpropyldimethylthiocarbamyl tetrasulfide, and γ-trimethoxysilylpropyl benzothiazyl tetrasulfide.

The resin composition may further contain a photoacid generator, a leveling agent, an antifoaming agent, an antioxidant, and the like.

As the photoacid generator, an onium salt having an A⁺B⁻ structure may be used. Examples of the photoacid generator include sulfonium salts such as UVACURE 1590 (manufactured by Daicel-Cytec), CPI-100P, 110P (San-Apro Ltd.) and iodonium salts such as Omnicat 250 (manufactured by IGM Resins), WPI-113 (manufactured by FUJIFILM Wako Pure Chemical Corporation), Rp-2074 (manufactured by Rhodia Japan Ltd.).

### (Inorganic oxide particles)

The inorganic oxide particles according to the present embodiment have a surface subjected to hydrophobic treatment. The hydrophobic treatment according to the present embodiment is introduction of a hydrophobic group onto the surface of the inorganic oxide particles. The inorganic oxide particles having a hydrophobic group introduced have excellent dispersibility in the resin composition. The hydrophobic group may be a reactive group such as a (meth)acryloyl group or a vinyl group, or a non-reactive group such as a hydrocarbon group (for example, an alkyl group) or an aryl group (for example, a phenyl group). In the case of the inorganic oxide particles having a reactive group, the resin layer having high Young's modulus is easy to form.

The inorganic oxide particles according to the present embodiment are dispersed in a dispersion medium. Using the inorganic oxide particles dispersed in the dispersion medium allows for uniform dispersion of the inorganic oxide particles in the resin composition and then improvement of the storage stability of the resin composition. The dispersion medium is not particularly limited as long as curing of the resin composition is not obstructed. The dispersion medium may be reactive or non-reactive.

A monomer such as a (meth)acryloyl compound and an epoxy compound can be used as the reactive dispersion medium. Examples of the (meth)acryloyl compound include 1,6-hexanediol di(meth)acrylate, EO-modified bisphenol A di(meth)acrylate, polyethylene glycol di(meth)acrylate, PO-modified bisphenol A di(meth)acrylate, polypropylene glycol di(meth)acrylate, and polytetramethylene glycol di(meth)acrylate. Compounds exemplified by monomers described above may be used as the (meth)acryloyl compound.

A ketone solvent such as methyl ethyl ketone (MEK), an alcohol solvent such as methanol (MeOH), propylene glycol monomethyl ether (PGME), or an ester solvent such as propylene glycol monomethyl ether acetate (PGMEA) can be used as the non-reactive dispersion medium. In the case of using the non-reactive dispersion medium, the resin composition may be prepared by mixing the base resin and the inorganic oxide particles dispersed in the dispersion medium and removing a part of the dispersion medium. When the dispersion medium containing the inorganic oxide particles is observed with an optical microscope (about 100 times magnification) and particles are not observed, the inorganic oxide particles are regarded to be dispersed as the primary particle.

The inorganic oxide particles dispersed in the dispersion medium remain to be dispersed in the resin layer even after curing of the resin composition. When reactive dispersion medium is used, the inorganic oxide particles are mixed together with the dispersion medium into the resin composition and are incorporated in the resin layer with the dispersion condition maintained. When non-reactive dispersion medium is used, at least a part of the dispersion medium evaporates and disappears from the resin composition. However, the inorganic oxide particles remain in the resin composition with the dispersion condition remained and is also present in the postcure resin layer with the dispersion condition remained. Electron microscopic observation shows that the primary particle of the inorganic oxide particles present in the resin layer is dispersed.

It is preferable that the inorganic oxide particles be at least one selected from the group consisting of silicon dioxide (silica), zirconium dioxide (zirconia), aluminum oxide (alumina), magnesium oxide (magnesia), titanium oxide (titania), tin oxide, and zinc oxide because these have excellent dispersibility in the resin composition and easily form a tough resin layer. From the view point of excellent inexpensiveness, easy surface treatment, permeability to ultraviolet ray, and easy provision of a resin layer with appropriate hardness, it is more preferable that the hydrophobic silica particles be used as the inorganic oxide particles according to the present embodiment.

From the view point of reducing the Young's modulus of the primary resin layer, the average primary particle size of the inorganic oxide particles may be 650 nm or less, preferably 600 nm or less, more preferably 500 nm or less, and still more preferably 400 nm or less. From the view point of provision of the strength of the primary resin layer, the average primary particle size of the inorganic oxide particles is preferably 5 nm or more, more preferably 10 nm or more. The average primary particle diameter can be measured with image analysis of electron microscope pictures, a light scattering method or a BET method, for example. The dispersion medium in which the primary particle of the inorganic oxide particles is dispersed appears to be visually transparent when the diameter of the primary particle is small. When the diameter of the primary particle diameter is relatively large (40 nm or more), the dispersion medium in which the primary particle is dispersed appears to be clouded, but the precipitate is not observed.

The content of the inorganic oxide particles is 1% by mass or more and 45% by mass or less, preferably 2% by mass or more and 40% by mass or less, and more preferably 3% by mass or more and 35% by mass or less, based on the total amount of the resin composition (total amount of the base resin and inorganic oxide particles). The content of the inorganic oxide particles is 1% by mass or more, allowing a tough resin layer to be easily formed. The content of the inorganic oxide particles is 45% by mass or less, allowing a resin layer with a low Young's modulus to be easily formed. The total amount of the resin composition and the total amount of the cured product of the resin composition may be considered to be the same. The content of the inorganic oxide particles is 1% by mass or more and 45% by mass or less, preferably 2% by mass or more and 40% by mass or less, and more preferably 3% by mass or more and 35% by mass or less, based on the total amount of the primary resin layer (the total amount of the cured resin composition constituting the primary resin layer).

From the view point of suppressing the generation of voids in the optical fiber, the Young's modulus of the cured product of the above resin composition is preferably 4 MPa or less at 23°C ± 2°C, more preferably 0.05 MPa or more and 4.0 MPa or less, still more preferably 0.1 MPa or more and 3.5 MPa or less, and particularly preferably 0.3 MPa or more and 3.0 MPa or less.

The resin composition according to the present embodiment can be suitably used as a primary coating material for an optical fiber. Using the resin composition according to the present embodiment for a primary resin layer can suppress the generation of voids while reducing a Young's modulus and produce an optical fiber being excellent in lateral pressure characteristics.

### <Optical fiber>

FIG. 1 is a schematic cross-section diagram showing an example of the optical fiber according to the present embodiment. The optical fiber 10 comprises the glass fiber 13 including the core 11 and the cladding 12, and the coating resin layer 16 including the primary resin layer 14 provided on the outer periphery of the glass fiber 13 and the secondary resin layer 15.

The cladding 12 surrounds the core 11. The core 11 and the cladding 12 mainly include glass such as silica glass, germanium-added silica can be used, for example, in the core 11, and pure silica or fluorine-added silica can be used in the cladding 12.

In FIG. 1, for example, the outside diameter (D2) of the glass fiber 13 is about 125 µm, and the diameter (D1) of the core 11 constituting the glass fiber 13 is about 7 to 15 µm.

The thickness of the coating resin layer 16 is typically about 60 to 70 µm. The thickness of each of the primary resin layer 14 and the secondary resin layer 15 may be about 10 to 50 µm, and for example, the thickness of the primary resin layer 14 may be 35 µm and the thickness of the secondary resin layer 15 may be 25 µm. The outside diameter of the optical fiber 10 may be about 245 to 265 µm.

The thickness of the coating resin layer 16 may be about 27 to 48 µm. Each layer thickness of the primary resin layer 14 and the secondary resin layer 15 may be about 10 to 38 µm, and for example, the thickness of the primary resin layer 14 may be 25 µm and the thickness of the secondary resin layer 15 may be 10 µm. The outside diameter of the optical fiber 10 may be about 179 to 221 µm.

Furthermore, the outside diameter (D2) of the glass fiber 13 may be about 100 µm, and the thickness of the coating resin layer 16 may be about 22 to 37 µm. Each layer thickness of the primary resin layer 14 and the secondary resin layer 15 may be about 5 to 32 µm, and for example, the thickness of the primary resin layer 14 may be 25 µm and the thickness of the secondary resin layer 15 may be 10 µm. The outside diameter of the optical fiber 10 may be about 144 to 174 µm.

The Young's modulus of the secondary resin layer is preferably 1300 MPa or more at 23°C, more preferably 1300 MPa or more and 2600 MPa or less, and further preferably 1300 MPa or more and 2500 MPa or less. The Young's modulus of the secondary resin layer of 1300 MPa or more is easy to improve the lateral pressure characteristics, and the Young's modulus of 2600 MPa or less is hard to cause a crack or the like in the secondary resin layer due to provision of appropriate toughness with the secondary resin layer.

The secondary layer can be formed by curing a resin composition including a urethane (meth)acrylate oligomer, a monomer, and a photopolymerization initiator. Prior art techniques can be used for a resin composition for the secondary resin layer. A urethane (meth)acrylate oligomer, a monomer and a photopolymerization initiator may be appropriately selected from compounds exemplified in the above base resin. In addition, the resin composition for the secondary resin layer may include hydrophobic inorganic oxide particles. The resin composition constituting the secondary resin layer has composition different from the resin composition forming the primary resin layer. From the view point of increasing the Young's modulus of the secondary resin layer, the number average molecular weight of the polyol compound used in synthesizing the urethane (meth)acrylate oligomer may be 400 or more and 1000 or less.

### Examples

Hereinafter, the results of evaluation test using Examples and Comparative Examples according to the present disclosure will be shown, and the present disclosure is described in more detail. The present invention is not limited to these examples.

### [Preparation of resin composition]

### (Oligomer)

As the oligomer, a urethane acrylate oligomer obtained by reacting polypropylene glycol having a molecular weight of 4000, isophorone diisocyanate, hydroxyethyl acrylate, and methanol was prepared.

### (Monomer having a phenoxy group)

As the monomer having a phenoxy group, nonylphenol EO-modified acrylate (trade name "Aronix M-113" of Toagosei Co., Ltd., n≈4), nonylphenol EO-modified acrylate (trade name "Aronix M-111" of Toagosei Co., Ltd., n≈1), phenol EO-modified acrylate (trade name "Aronix M-101A" of Toagosei Co., Ltd., n≈2), phenol EO-modified acrylate (trade name "Aronix M-102" of Toagosei Co., Ltd., n≈4), phenoxyethyl acrylate (trade name "light acrylate PO-A" of Kyoei Chemical Co., Ltd.), 3-phenoxybenzyl acrylate (trade name "Light Acrylate POB-A" of Kyoei Chemical Co., Ltd.), and 2-hydroxy-3-phenoxypropyl acrylate (trade name "Epoxy Ester M-600A" of Kyoei Chemical Co., Ltd.) were prepared.

### (Monomer having no phenoxy group)

As the monomers having no phenoxy group, N-vinylcaprolactam and 1,6-hexanediol diacrylate were prepared.

### (Photopolymerization initiator)

As the photopolymerization initiator, 2,4,6-trimethylbenzoyldiphenylphosphine oxide was prepared.

### (Silane coupling agent)

As the silane coupling agent, 3-mercaptopropyltrimethoxysilane was prepared.

### (Inorganic oxide particles)

As the inorganic oxide particles, hydrophobic silica particles with an average particle size of 10 nm or more and 15 nm or less, hydrophobic silica particles with an average particle size of 70 nm or more and 100 nm or less, hydrophobic silica particles with an average particle size of 250 nm or more and 350 nm or less, and hydrophobic silica particles with an average particle size of 450 nm or more and 640 nm or less were prepared. These silica particles had a methacryloyl group and were dispersed in methyl ethyl ketone (MEK).

### (Resin composition)

A base resin was prepared by mixing the above oligomer, monomer, photopolymerization initiator, and silane coupling agent. The base resin and the silica particles were mixed, and then most of MEK as a dispersion medium was removed under reduced pressure to produce a resin composition in each of Examples and Comparative Examples. The content of remaining MEK in the resin composition was 5% by mass or less.

In Table 1, Table 2, and Table 3, each value of the monomer, oligomer, and silane coupling agent is the content (% by mass) based on the total amount of the monomer, oligomer, silane coupling agent, and silica particles, and the value of the silica particles is the content based on the total amount of the resin composition.

The following evaluation was performed by using the resin compositions obtained in Examples and Comparative Examples.

### (Young's modulus)

Each of the resin composition was applied onto a polyethylene terephthalate (PET) film by using a spin coater, and then cured using an electrodeless UV lamp system (D bulb) (manufactured by Heraeus) at a condition of 1000 ± 100 mJ/cm² to form a resin layer having a thickness of 200 ± 20 µm on the PET film. The resin layer was peeled off from the PET film to obtain a resin film.

A resin film was punched into a dumbbell shape of JIS K 7127 type 5 and pulled under a condition of 23 ± 2°C and 50 ± 10% RH using a tensile tester at a tension speed of 1 mm/min and a gauge length of 25 mm, and a stress-strain curve was obtained. Young's modulus was determined by 2.5 % secant line.

### [Preparation of optical fiber]

40 parts by mass of urethane acrylate oligomer which is a reaction product of polypropylene glycol with a molecular weight of 600, 2,4-tolylene diisocyanate, and 2-hydroxyethyl acrylate; 35 parts by mass of isobornyl acrylate; 24 parts by mass of bisphenol A diglycidyl ether acrylic acid adduct; 0.5 parts by mass of 2,4,6-trimethylbenzoyldiphenylphosphine oxide; and 0.5 parts by mass of 1-hydroxycyclohexyl phenyl ketone were mixed to produce a resin composition A1 for the secondary resin layer.

On the outer periphery of a 125 µm diameter glass fiber composed of a core and cladding, a primary resin layer with a thickness of 35 µm was formed by using the resin composition produced in Examples or Comparative Examples, and a secondary resin layer was formed on the outer periphery thereof by using the resin composition A1 to produce an optical fiber. A linear speed was 1500 m/min.

### (Observation of voids)

10 m of an optical fiber was stored at 85°C and 85% humidity for 120 days and then left at -40°C for 16 hours, and the presence or absence of voids with a diameter of 10 µm or more was observed with a microscope. The case where the number of voids per 1 m of the optical fiber was less than 1 was evaluated as "A", the case where the number of voids was 1 to 2 was evaluated as "B", and the case where the number of voids was more than 2 was evaluated as "C".

### (Lateral pressure characteristics)

The transmission loss of light having a wavelength of 1550 nm when the optical fiber was wound into a single layer onto a bobbin with its surface covered with sandpaper and having a diameter of 280 mm was measured by an OTDR (Optical Time Domain Reflectometer) method. In addition, the transmission loss of light having a wavelength of 1550 nm when the optical fiber 10 was wound into a single layer on a bobbin having a diameter of 280 mm without sandpaper was measured by the OTDR method. Difference in the measured transmission loss was obtained and the lateral pressure characteristics was judged to be "OK" when the transmission loss difference was 0.6 dB/km or less, and the lateral pressure characteristics was judged to be "NG" when the transmission loss difference was over 0.6 dB/km.

**[Table 1]**

| | | | Example 1 | Example 2 | Example 3 | Example 4 | Example 5 | Example 6 | Example 7 |
|---|---|---|---|---|---|---|---|---|---|
| Urethane acrylate oligomer | | | 72.00 | 72.00 | 60.00 | 70.00 | 80.00 | 30.00 | 25.71 |
| M-113 | | | 1.00 | 17.36 | 22.80 | 12.80 | 2.80 | 36.40 | 31.20 |
| N-vinylcaprolactam | | | 22.00 | 5.76 | 4.80 | 4.80 | 4.80 | 2.40 | 2.06 |
| 1,6-hexanediol diacrylate | | | 1.92 | 1.92 | 1.60 | 1.60 | 1.60 | 0.80 | 0.69 |
| 3-mercaptopropyltrimethoxysilane | | | 0.96 | 0.96 | 0.80 | 0.80 | 0.80 | 0.40 | 0.34 |
| Average particle size of silica particles (nm) | | | 10-15 | 10-15 | 10-15 | 10-15 | 10-15 | 10-15 | 10-15 |
| Silica particles (% by mass) | | | 2 | 2 | 10 | 10 | 10 | 30 | 40 |
| | Young's modulus (MPa) | | 3.0 | 0.6 | 0.66 | 0.3 | 0.15 | 1.8 | 2.7 |
| | | Generation of voids | A | A | A | A | A | A | A |
| Lateral pressure characteristics | | | OK | OK | OK | OK | OK | OK | OK |

**[Table 2]**

| | | | Example 8 | Example 9 | Example 10 | Example 11 | Example 12 | Example 13 |
|---|---|---|---|---|---|---|---|---|
| Urethane acrylate oligomer | | | 60.00 | 60.00 | 60.00 | 60.00 | 60.00 | 60.00 |
| M-111 | | | 22.80 | - | - | - | - | - |
| PO-A | | | - | 22.80 | - | - | - | - |
| M-600A | | | - | - | 22.80 | - | - | - |
| M-101A | | | - | - | - | 22.80 | - | - |
| M-102 | | | - | - | - | - | 22.80 | - |
| POB-A | | | - | - | - | - | - | 22.80 |
| N-vinylcaprolactam | | | 4.80 | 4.80 | 4.80 | 4.80 | 4.80 | 4.80 |
| 1,6-hexanediol diacrylate | | | 1.60 | 1.60 | 1.60 | 1.60 | 1.60 | 1.60 |
| 3-mercaptopropyltrimethoxysilane | | | 0.80 | 0.80 | 0.80 | 0.80 | 0.80 | 0.80 |
| Average particle size of silica particles (nm) | | | 10-15 | 10-15 | 10-15 | 10-15 | 10-15 | 10-15 |
| Silica particles (% by mass) | | | 10 | 10 | 10 | 10 | 10 | 10 |
| | Young's modulus (MPa) | | 1.5 | 2.4 | 2.7 | 2.1 | 1.8 | 2.4 |
| | | Generation of voids | A | A | A | A | A | A |
| Lateral pressure characteristics | | | OK | OK | OK | OK | OK | OK |

**[Table 3]**

| | | | Example 14 | Example 15 | Example 16 | Comparative Example 1 | Comparative Example 2 | Comparative Example 3 |
|---|---|---|---|---|---|---|---|---|
| Urethane acrylate oligomer | | | 60.00 | 60.00 | 60.00 | 75.00 | 60.00 | 21.00 |
| M-113 | | | 22.80 | 22.80 | 22.80 | 16.00 | - | 26.00 |
| N-vinylcaprolactam | | | 4.80 | 4.80 | 4.80 | 6.00 | 4.80 | 1.71 |
| 1,6-hexanediol diacrylate | | | 1.60 | 1.60 | 1.60 | 2.00 | 24.40 | 0.57 |
| 3-mercaptopropyltrimethoxysilane | | | 0.80 | 0.80 | 0.80 | 1.0 | 0.80 | 0.29 |
| Average particle size of silica particles (nm) | | | 70-100 | 250-350 | 450-640 | - | 10-15 | 10-15 |
| Silica particles (% by mass) | | | 10 | 10 | 10 | - | 10 | 50 |
| | Young's modulus (MPa) | | 0.6 | 0.6 | 0.6 | 0.6 | 30 | 4.5 |
| | | Generation of voids | A | A | A | B | A | A |
| Lateral pressure characteristics | | | OK | OK | OK | OK | NG | NG |

It was confirmed that the resin compositions in Examples could produce an optical fiber in which the Young's modulus required for the primary resin layer is satisfied, the generation of voids was suppressed, and lateral pressure characteristics were improved.

### Reference Signs List

10: Optical fiber, 11: Core, 12: Cladding, 13: Glass fiber, 14: Primary resin layer, 15: Secondary resin layer, 16: Coating resin layer.

## Claims

1. A resin composition for coating an optical fiber, comprising:
a base resin containing a urethane (meth)acrylate oligomer, a monomer having a phenoxy group, a photopolymerization initiator, and a silane coupling agent; and
hydrophobic inorganic oxide particles, wherein
a content of the inorganic oxide particles is 1% by mass or more and 45% by mass or less based on a total amount of the resin composition.

2. The resin composition according to claim 1, wherein a content of the monomer having a phenoxy group is 0.5% by mass or more and 60% by mass or less based on a total amount of the base resin.

3. The resin composition according to claim 1 or claim 2, wherein the inorganic oxide particle is at least one selected from the group consisting of silicon dioxide, zirconium dioxide, aluminum oxide, magnesium oxide, titanium oxide, tin oxide, and zinc oxide.

4. The resin composition according to any one of claim 1 to claim 3, wherein an average primary particle diameter of the inorganic oxide particles is 650 nm or less.

5. The resin composition according to any one of claim 1 to claim 4, wherein the monomer having a phenoxy group is at least one selected from the group consisting of phenol EO-modified (meth)acrylate, nonylphenol EO-modified (meth)acrylate, phenoxyethyl (meth)acrylate, 2-hydroxy-3-phenoxypropyl (meth)acrylate, and 3-phenoxybenzyl (meth)acrylate.

6. A primary coating material for an optical fiber, comprising the resin composition according to any one of claim 1 to claim 5.

7. An optical fiber comprising:
a glass fiber comprising a core and cladding;
a primary resin layer contacting with the glass fiber and coating the glass fiber; and
a secondary resin layer coating the primary resin layer,
wherein the primary resin layer comprises a cured product of the resin composition according to any one of claim 1 to claim 5.

8. The optical fiber according to claim 7, wherein a Young's modulus of a cured product of the resin composition is 4 MPa or less at 23°C ± 2°C.
